Europäisches Patentamt

European Patent Office

Office européen des brevets

(19)

(11) Publication number: **0 044 354**
**B1**

# (12) EUROPEAN PATENT SPECIFICATION

(45) Date of publication of patent specification: **05.12.84**

(51) Int. Cl.³: **B 27 C 1/10, B 27 G 21/00**

(21) Application number: **80104332.4**

(22) Date of filing: **23.07.80**

(54) **Combination guard and rabbeting depth gauge associated with power planer.**

(43) Date of publication of application:
**27.01.82 Bulletin 82/04**

(45) Publication of the grant of the patent:
**05.12.84 Bulletin 84/49**

(84) Designated Contracting States:
**AT BE CH DE FR GB IT LI LU NL SE**

(56) References cited:
**DE-C- 823 039**
**FR-A-2 051 083**
**US-A-2 984 270**

(73) Proprietor: **Black & Decker Inc.**
**Drummond Plaza Office Park 1423 Kirkwood Highway**
**Newark Delaware 19711 (US)**

(72) Inventor: **Cuneo, Giuseppe**
**Via Lorentino 2A**
**I-24032 Calolziocorte (IT)**

(74) Representative: **Blumbach Weser Bergen Kramer Zwirner Hoffmann Patentanwälte**
**Radeckestrasse 43**
**D-8000 München 60 (DE)**

Courier Press, Leamington Spa, England.

EP 0 044 354 B1

## Description

### Background of the Invention

Portable hand-held planers are well known in the industry. These devices usually encompass a housing in which is located an electric motor and a cylindrical rotatable planing tool. Appropriate transmission means is supplied between the motor and the tool. The planer is usually held in a manner when operated whereby the cylindrical tool rotates on a horizontal axis and numerous passes against a work piece are mode until the wooden work piece or a portion thereof has been planed away or rabbeting has been accomplished. The major portion of the planing tool is positioned in the housing. A rectangularly shaped opening is usually supplied at the bottom of the planer and a portion of the planing tool projects therefrom to impinge on a work piece.

As it is desirable, especially when attempting to accomplish rabbeting, to control the depth to which the planer may be permitted to go, a depth gauge is provided. The prior art is replete with teachings as to how this may be accomplished. One way is to provide a shoe which makes contact with an unplaned portion of the work piece being planed so that the depth to be achieved is a relationship between the unplaned portion and the planed portion. The shoe prevents further downward movement of the planer. By attaching or integrating the shoe to an upstanding portion and by providing means for adjustably and selectively clamping this upstanding portion at a selected desirable point a depth gauge is thereby provided.

As the planing tool operates at extremely high revolutions per minute and as the planing tool has extremely sharp cutting surfaces, it has been found desirable to prevent easy or accidental access to the planing tool from the side of the planer having the depth gauge.

To accomplish this salutary end, some portable planers are fitted with a metal shield alongside one side of the planer proximate the planing tool. The shield is designed to extend for a short distance between the bottom of the housing for approximately the same dimension as the planing tool. Such a shield poses a problem, for as the planer cuts the work piece to a predetermined level, provision must be made to get the shield out of the way but not so much that the planing tool is accessible from the side. Consequently, some shields have been hingedly mounted so that as the planer descends the shield pivots arcuately upwardly and out of the way. This is permissible when there are no side obstructions in an odd shaped work piece, but can pose a problem on occasion.

It is also accepted practice to provide a guide for controlling the width of a cut produced by a planer. In correct parlance this would be known as a rabbet. A guide of an appropriate type would be a fence assembly. Such an assembly is positioned on the side of the planer opposite to the side carrying the depth gauge and guard mechanism. Such an assembly consists generally of an elongated flat plate which appears to depend downwardly from the housing of the planer and is adjustably movable underneath the housing and planing tool. In use the work piece has a side surface in abutment with the flat plate.

FR—A—2 051 083 discloses a portable handheld planer that has a combination guard and rabbeting depth gauge. This combination includes a guard in the form of an L-shaped plate which is slideably mounted in the housing of the planer for movement in a direction transvers to the axis of the planing tool. A coil spring is provided between the housing on the one hand and the guard means on the other urging the guard means downwardly. Adjustment means which are mounted on the guard means and slideable together with the guard means are provided for fixing the guard means with respect to the housing and thus for adjusting the position in elevation of the guard means whereby the depth of the rabbet cut can be adjusted to any value with a predetermined range of values. Once the guard means has been fixed by means of the adjustment means there is no blocking of an access to the lower portion of the planing tool corresponding to the depth of the rabbet cut.

From the DE—C—823 039 a portable handheld planer is known which has a bottom pivotably mounted at the housing and thus controlling the cutting depth of the planer. In order to protect the planing tool against any damage as long as the planer is not in use a coil spring is provided between the bottom of the planer and the housing urging the bottom into a position in which the planing tool does not extend below the bottom. A screw is provided as an adjustable stop means controlling the extent to which the bottom may be moved upwardly against the spring force thereby setting the depth to which the planing cut is to be made.

The invention as claimed solves the problem of how to design a portable handheld planer with a combined depth gauge and guard means in which the function of the guard means is independent of that of the depth gauge.

The portable handheld planer according to the invention has a housing containing a substantially cylindrical planing tool, rotatably mounted for rotation about a horizontal axis, a motor for driving the planing tool, and a combination guard and rabbeting depth gauge. The combination guard and rabbeting depth gauge includes guard means mounted adjacent the planing tool for blocking access to at least a part of the latter, said guard means being connected to the housing for movement in a direction transverse to said horizontal axis, resilient means for resiliently urging said guard means downwardly and adjustment means for setting the depth to which the rabbet cut is to be made. The planer is characterized by stop means for controlling the extent to which the guard means may be moved upwardly against the urging force of the resilient means when the depth of the rabbet cut has been set, the position in elevation of said stop means being adjustable by said adjustment means whereby said depth of the rabbet cut can be adjusted.

A main advantage offered by the invention is that there is no possibillity for access by the operator of the planer to the planing tool from the side of the planer having the combination guard means and depth gauge. This advantage is achieved completely independent of the depth of the rabbet cut set by means of the adjustment means. The invention allows that the manufacturing costs can be reduced without sacrificing safety and utility.

As will be noted in greater detail below, the planer to which this invention is applicable, itself, may be of a fairly conventional structure, being supplied with a suitable housing, handle, electric conduit and means for adjusting the cutting bite of the cylindrical planing tool that extends to a very small extent from a rectangular opening at the bottom of the housing. In a preferred embodiment of the present planer, one side of the housing above the area in which the planing tool is found is provided with structure to retain the combination guard and depth gauge. The combination is constructed of an L-shaped plate where the bottom leg is a shoe, the underside of which engages the upwardly facing surface of that portion of the work piece not planed. This L-shaped plate is urged downwardly for a fixed maximum distance and thereby inhibits access to the planing tool from that side. Operative means is provided in association with the L-shaped plate to control the distance to which the L-shaped plate may be counter urged into the housing. The operative means in the housing may be adjusted so that the L-shaped plate may be moved into the housing to a predetermined distance after which it cannot be urged additionally so that the operative means acts as a stop.

When the planer is raised from the work piece after the planing depth has been achieved or at any point prior as when numerous passes are made, the L-shaped plate descends to its normal spring urged position, thereby inhibiting access to the planing tool. Yet, the depth gauge is still set at the predetermined position and will remain in this position until modified.

At the other side of the housing, a fence assembly may be provided and comprises an L-shaped bracket. The upstanding portion is suitably attached to the housing. The other portion is attached to an elongated member by means of a clamping bolt the shank of which passes through an elongated slot in the member. The end closest to the housing is supplied with a fence normal to the elongated member and disposed to move under the planer including the planing tool. Adjustment is achieved by means of the clamping bolt and a nut carrying knob suitable therefor.

Brief Description of the Drawings

Figure 1 is a perspective view of a portable planer of that side depicting the combination guard and depth gauge of an embodiment of the present invention.

Figure 2 is a perspective view of the planer showing the other side to which is attached a fence assembly.

Figure 3 is a side elevation having a portion of a side cover broken away and showing more details of the combination guard and depth gauge.

Figure 4 is a horizontal cross-sectional view taken along line 4—4 of Figure 3 showing the planer except for the fence assembly. This view shows significant details of the combination guard and depth guage being depicted.

Figure 5 is a partial vertical cross-sectional view taken along line 5—5 of Figure 3 showing a portion of the combination guard and depth gauge and associate structure.

Figure 6 is an exploded view of the combination of the guard and depth gauge portion.

Figure 7 is an exploded view of the fence assembly.

Figure 8A is a fragmented view showing the use of the planer prior to rabbeting.

Figure 8B is a similar view during the course of rabbeting.

Figure 8C is a similar view at the conclusion of the rabbeting procedure.

Detailed Description of the Embodiment

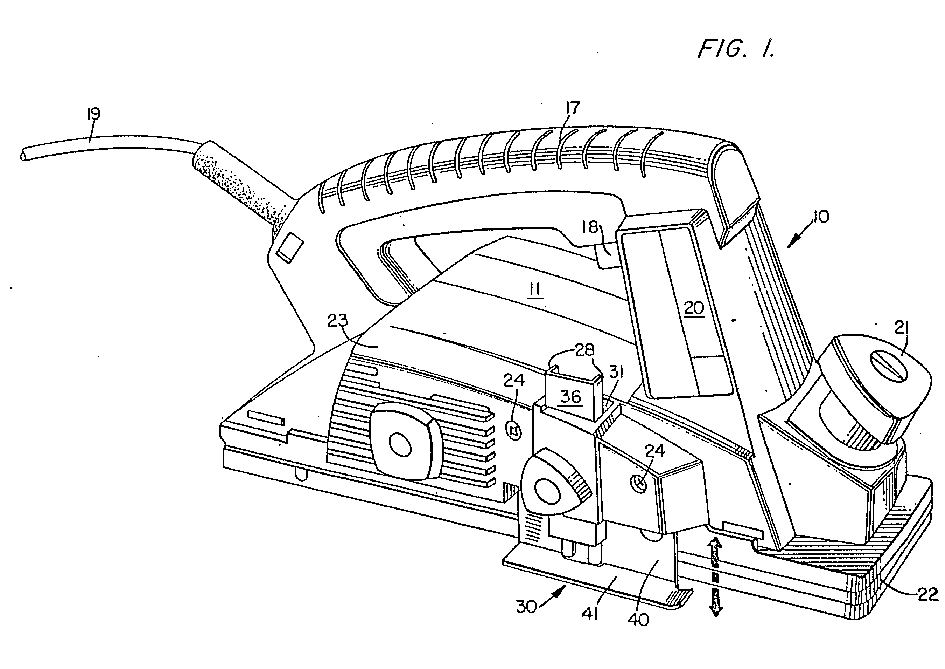

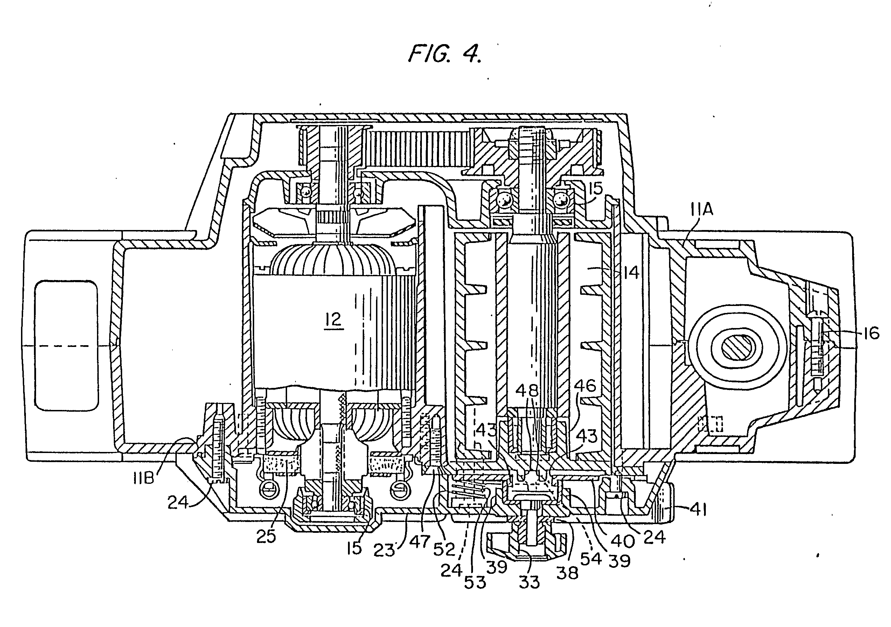

Now, turning to the drawings for a better understanding of the invention, attention is directed to Figure 1 which depicts the planer, generally, 10 of the embodiment. The planer 10 possesses a number of relatively conventional parts, for instance, a housing 11, which may be constructed of metal or a suitably polymeric material or a combination of materials, and having suitably mounted therein, as can be seen in Figure 4, an electric motor 12, belt transmission 13, a cylindrical planing means 14, all suitably journalled with bearings 15. As can be further seen from Figure 4, for instance, the housing 11 comprises two complementary parts 11A and 11B which are suitably secured as by an illustrative screw 16 as noted.

The planer 10 also possesses a suitably positioned handle 17 having mounted therein a conventional electric trigger switch 18 which is interposed between an electric conduit 19 and the electric motor in a manner well known. The forward part of the handle has a chip expelling means 20. The most forward part of the planer 10 has a clamping screw knob 21 that permits the forward shoe 22 at the forward underside of the planer to be selectively raised or lowered in relatively small increments whereby the size of the cut produced by the rotating cylindrical planing means is controlled.

The side of the housing 11 shown in Figure 1 is supplied with hollow cover 23 which is secured to the housing as by suitably placed screws 24. The hollow cover 23 provides access to the brushes 25 (as seen in Figure 4) of the electric motor 12 and, importantly, carries the essential component parts of the combination guard and depth gauge 30 of the present invention.

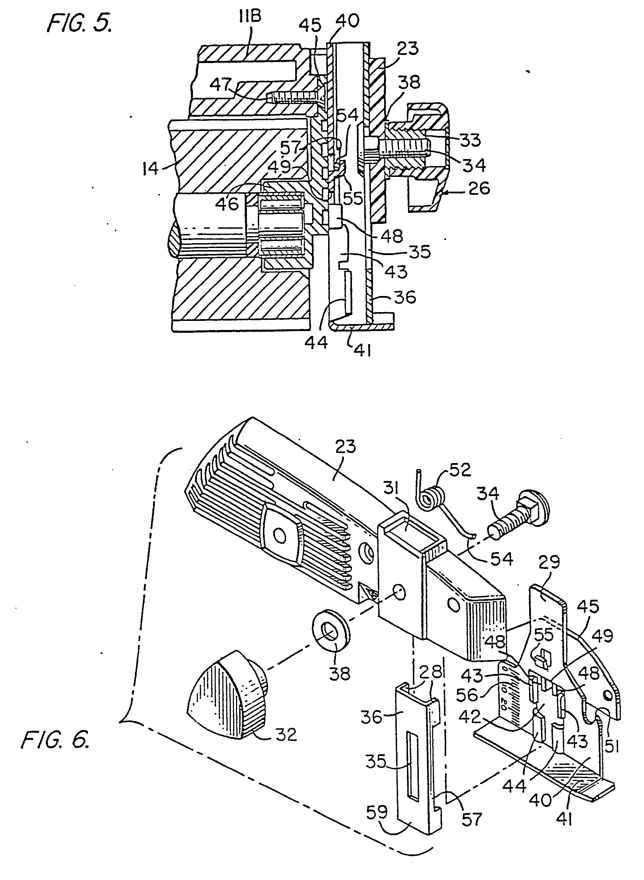

The said combination guard and depth gauge is constructed of relatively few parts. With regard thereto attention is directed to such figures as Figures 1, 3, 4, 5, and 6, with special emphasis to Figure 6.

The cover 23 has a rectangularly shaped top opening 31. Externally of the side of the cover 23 is a knob 32 having centrally a female thread 33 which can be readily seen from Figures 4 and 6. The knob 32 is screwed onto bolt 34 which extends outwardly from the cover 23 through elongated slot 35 of a vertically positioned U-shaped member 36, then through aperture 37 in the cover 23, through washer 38. The U-shaped member 36 is adjustably slidably mounted between rails 39 extending inwardly from cover 23 and are suitably aligned with the top opening whereby the U-shaped member 36 is permitted to project therethrough. It will be appreciated the assembly just described permits clamping of the U-shaped member into a desired secured position achieved by tightening the knob 32. A new position may be selected by loosening the knob 32 thereby permitting the relocation of the U-shaped member 36.

Behind the U-shaped member 36 and having portions complementary therewith is an L-shaped plate 40. The said plate 40 terminates in shoe 41 which is the bottom leg of the said plate 40. The bottom facing portion of the shoe is adapted to be in slidable engagement with the surface of a work piece to be rabbeted. The plate has a relatively large opening 42 extending from the said shoe 41 in an upward manner. A first pair of perpendicular projections 43 extend from the sides of the opening 42 which are adapted and constructed to ride internally and against the legs 28 of the U-shaped member 36 as can best be seen from Figure 6. Vertically displaced therefrom and below the first pair of projections is a second pair of curved projections 44 also designed to ride internally with respect to said U-shaped member 36.

The arrangement herein just discussed is in operative association with a bearing plate 45 shown in Figures 5 and 6. On one surface of the bearing plate is a journalling means 46 for one bearing of the planing means 14. The bearing plate 45 is secured to the housing at the ends thereof as by machine screws 47. The other side of the bearing plate 45 has abutment means in the form of two perpendicular projections 48 adapted and constructed to project into opening 42 which operates as a slot means. The extent of the downward movement of the L-shaped plate 40 is controlled by the said projections 48 which abut against edge 49 of the opening 42 when the L-shaped plate 40 is at full descent.

From Figures 1 and 6 it will be seen that an upwardly facing notch 51 is positioned whereby the L-shaped plate 40 is not impeded in its upward movement by one of the screws 24 designed to afix the cover 23 in place.

In order to drive the L-shaped plate 42 downwardly to the maximum position defined by the edge 49 of the opening 42 and the projections 48 of the bearing plate 45, a short helical spring 52 is mounted on an inwardly extending projection 53 of the cover 23. The projection 53 accommodates a cover screw 24 contained in a bore thereof. The active end 54 of the spring rides against hook 55, stamped out of L-shaped plate 40, downwardly perpendicularly with respect to the bottom of the planer surface. The active end 54 of the spring is positioned in the recess 57 shown on each leg 28 of the U-shaped member 36. As a result, portion 29 of the L-shaped plate 40 is permitted to easily ride against the leading edges of the legs 28.

It should be noted that from Figures 1 and 6, the upstanding portion of L-shaped plate 40 is supplied with graduations 56 designed to provide suitable indicia on the depth of rabbeting that may be achieved. For instance, while holding the planer vertically, knob 32 is loosened whereby U-shaped member 36 drops downwardly to the top of the shoe 41. Then, the shoe 41 is pushed upwardly into cover 23 and in doing so U-shaped member 36 is also tandemly pushed into the cover 23. The cover 23 is supplied with a position discerning edge 58 against which the disappearing graduations are noted. The more the shoe 41 is moved upwardly and concomitantly the U-shaped member 36, the higher will be the stop afforded by the bottom edge 59 of the U-shaped member 36 when the knob 32 is retightened thereby clamping the U-shaped member 36 into place. Of course a release of the shoe 41 will again permit the L-shaped plate 40 to project to its furthermost position defined by the edge 49 of the opening 42 and the projections 48 of the bearing plate 45.

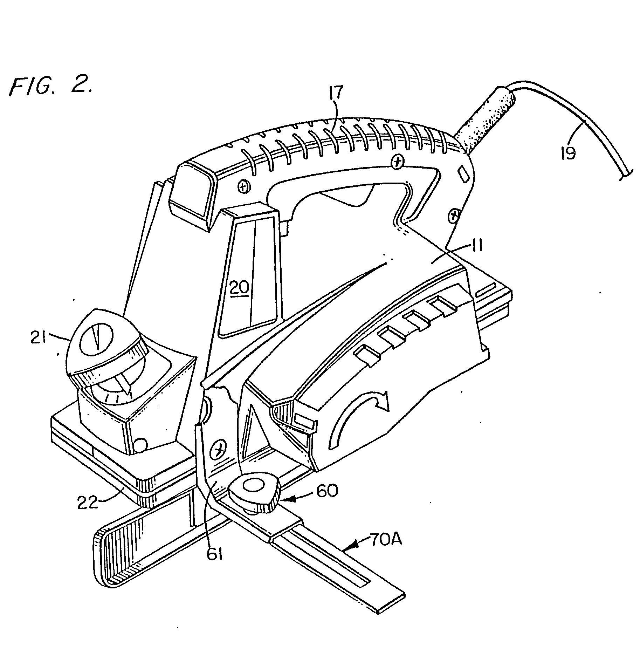

Attention is now directed to Figures 2, 3 and 7 for a review of the fence assembly 60 designed to control the width of the rabbeting capable of being produced. The fence assembly 60 includes an L-shaped bracket 61 terminating in a horizontal tongue 63 adapted and constructed to fit into a small well 64 located at the side of the housing 11A. The upstanding portion 65 of the L-shaped bracket 61 has an aperture 64 which is in alignment with a female threaded means 66 designed to accept the machine screw 67 whereby the L-shaped bracket is securely affixed to the planer. The lower leg 68 of the L-shaped bracket has short depending skirts 69 dimensioned to embrace the fence 70A including an elongated member 70 having an elongated slot 71 therein. The fence 70A is completed by the presence of a plate 72 centrally affixed to the elongated member 70 at one end thereof as by welding or the like at appendage 73 of the elongated member 70. The elongated member 70 will be seen to carry the plate 72 the far side of which provides an abutting surface against which a work piece may be positioned.

The elongated member 70 is secured to the lower leg 68 of the L-shaped bracket by means of bolt 75A which is located in the slot 71 and through aperture 74 in the lower leg 68. A knob 75 having a female threaded portion is designed to be selectively loosened and tightened to permit the plate 72 to move from one furthermost position shown in Figure 2 to the other furthermost position as afforded by the extent of the slot. In diminishing the width of the rabbeting, the plate 72 moves underneath the planer in the direction of the combination depth gauge and guard aforementioned in detail.

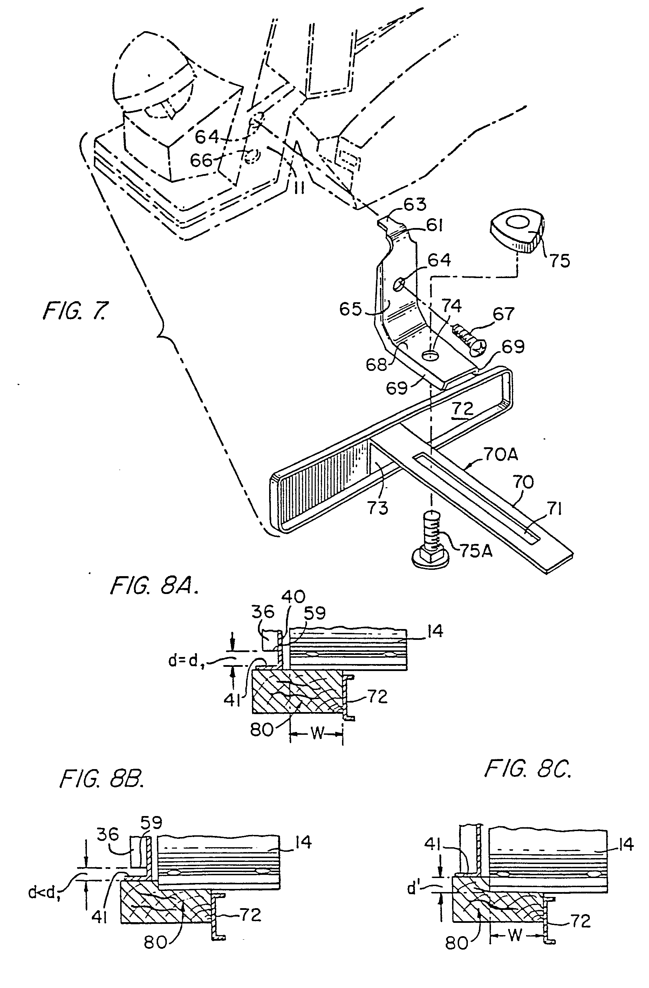

Having carefully discussed with sufficient particularity the component which is the combination of the guard and depth gauge and the component which is the fence assembly, it is now incumbent to discuss how these two components are useful in achieving rabbeting operation. Attention is therefore directed to Figures 8A, 8B, and 8C.

The planer may first be adjusted for a depth d = d, of the rabbet to be made by carrying out the steps hereinbefore discussed so that U-shaped member 36 is secured whereby the shoe 41 is spaced from the bottom of the U-shaped member by the amount "d,". The L-shaped plate 40 also acts as a guard and prevents access to the planing means 14 from the left side of the Figures as shown or from the right side as the planer is held. The fence assembly 60 is moved under the planer to fix the desired width "W" of the rabbet cut by moving the outwardly facing surface of plate 72 in abutment with the side of work piece 80. Figure 8A illustrates the beginning of the operation. Figure 8B shows a part of the rabbet that has been cut. Note that the quantity "d" is smaller as the planer descends and as shoe 41 ascends. Finally, Figure 8C shows shoe 41 stopped at the bottom of U-shaped member 36 at its lowermost edge 59. The rabbet cut has been completed and the depth of the cut equals "d," of Figure 8A. The width of the cut W is set by adjusting the fence assembly 60.

It will be noted that throughout the rabbeting operation there is no possibility for access by the operator to the planing means 14 from the side having the combination guard and depth gauge.

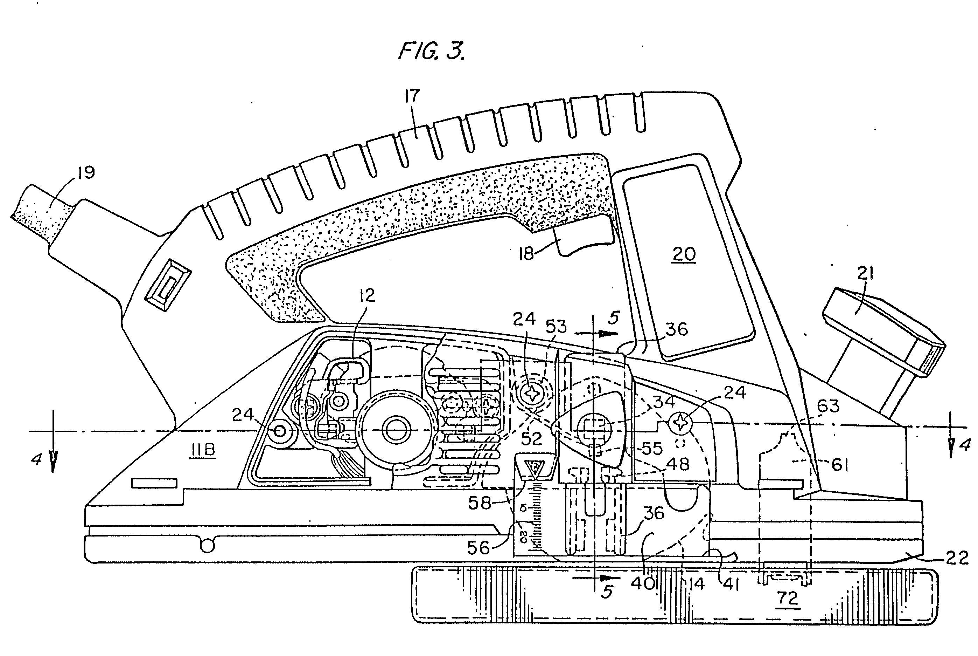

To further increase the understanding of the function of the depth gauge and guard combination, attention is again directed to Figure 3. It will be noted therefrom that the depth gauge is set for zero depth as evidenced by the position of the U-shaped member 36 with its edge 59 lying in directed abutment on the top surface of the shoe 41. In Figure 8A, for instance, the U-shaped member 36, shown as a fragment has been previously locked into position in spaced relationship to the top of shoe 41 thereby setting the desired depth "d," for the rabbet cut to be made.

**Claims**

1. A portable handheld planer for planing a workpiece, the planer having
a housing (11) containing a substantially cylindrical planing tool (14) rotatably mounted for rotation about a horizontal axis,
a motor for driving the planing tool, and
a combination guard and rabbeting depth gauge (30) including
— guard means (40) mounted adjacent the planing tool (14) for blocking access to at least a part of the latter, said guard means being connected to the housing (11) for movement in a direction transverse to said horizontal axis,
— resilient means (52) for resiliently urging said guard means (40) downwardly, and
— adjustment means (32, 34) for setting the depth to which the rabbet cut is to be made, characterized by
stop means (36) for contolling the extent to which the guard means (40) may be moved upwardly against the urging force of the resilient means (52) when the depth of the rabbet cut has been set,
the position in elevation of said stop means (36) being adjustable by said adjustment means (32, 34) whereby said depth of the rabbet cut can be adjusted.

2. The portable handheld planer of claim 1 characterized by fence means (60) for controlling the width of the rabbet cut.

3. The portable handheld planer of claim 1 or 2 characterized by mounting the combination guard and adjustable rabbeting depth gauge alongside an end of the planing tool (14) at one side of the housing, the guard means being limited in its downward movement by a fixed abutment (48) mounted in the planer (10).

4. The portable handheld planer of claim 3 characterized in that the stop means (36) includes an elongated member (36) that depends to a predetermined extent from the housing and has an end (59) that abuts against a projection on the guard means (41).

5. The portable handheld planer of claim 4, characterized in that the projection on the guard means (41) is a horizontal plate means adapted and constructed to be in a sliding contact with a workpiece when said planer (10) is operated.

6. The portable handheld planer of claim 5, characterized in that an edge portion of the side having the combination guard and depth gauge means (30) is provided with a channel means wherein the elongated member (36) is positioned and where an upstanding elongated portion (29) of the guard means (41) is positioned.

7. The portable handheld planer of claim 3 characterized by a fence means (60) at the opposite side of the housing including a bracket (61) having an essentially upstanding portion (65) and an essentially horizontal portion, the horizontal portion extending outwardly from the side of the housing, an elongated member (70) below said horizontal portion adapted and constructed to be clamped together at a predetermined portion, the end of the elongated member (70) proximate the housing having a wall (72) normal to the elongated member (70) and disposed to be movable under the planing tool (14) and housing (11) to achieve a desirable fixed position.

**Revendications**

1. Rabot à main portatif pour rabotage d'une pièce, comportant:

— Un carter (11) contenant un outil de rabotage sensiblement cylindrique (14) monté rotatif pour rotation autour d'un axe horizontal,

— un moteur pour entraîner l'outil de rabotage, et

— une combinaison d'un protecteur et d'une butée de profondeur de rabotage (30) comprenant:

— des moyens de protection (40) montés à proximité de l'outil de rabotage (14) pour bloquer l'accès à au moins une partie de ce dernier, ces moyens de protection étant accouplés au carter (11) pour se déplacer dans une direction transversale audit axe horizontal,

— des moyens élastiques (52) pour repousser élastiquement vers le bas lesdits moyens de protection (40), et

— des moyens de réglage (32, 34) pour déterminer la profondeur à laquelle la découpe en feuillure doit être faite, caractérisé par:

— des moyens d'arrêt (36) pour contrôler la mesure dans laquelle les moyens de protection (40) peuvent être déplacés vers le haut à l'encontre de la force de poussée des moyens élastiques (52) lorsque la profondeur de la découpe en feuillure a été déterminée,

— la position en hauteur desdits moyens d'arrêt (36) étant réglable par l'intermédiaire desdits moyens de réglage (32, 34), de sorte que ladite profondeur de la découpe en feuillure peut être réglée.

2. Rabot à main portatif selon la revendication 1, caractérisé par des moyens de garde (60) pour contrôler la largeur de la découpe en feuillure.

3. Rabot à main portatif selon la revendication 1 ou 2, caractérisé par le montage de la combinaison du protecteur et de la butée de profondeur de rabotage réglable le long d'une extrémité de l'outil de rabotage (14), sur un côté du carter, les moyens de protection étant limités dans leur mouvement vers le bas par une butée fixe (48) montée dans le rabot (10).

4. Rabot à main portatif selon la revendication 3, caractérisé en ce que les moyens d'arrêt (36) comportent un organe allongé (36) qui pend dans une mesure prédéterminée par rapport au carter, et a une extrémité (59) qui vient en butée contre une projection des moyens de protection (41).

5. Rabot à main portatif selon la revendication 4, caractérisé en ce que la projection des moyens de protection (41) est constituée par des moyens formant une plaque horizontale conçue et formée pour être en contact coulissant avec une pièce à usiner lorsque le rabot (10) est manoeuvré.

6. Rabot à main portatif selon la revendication 5, caractérisé en ce qu'une partie de bord du côté portant la combinaison du protecteur et des moyens formant butée de profondeur (30) est pourvue de moyens formant gouttière, dans lesquels l'organe allongé (36) est placé, et où est placée une partie allongée verticale (29) des moyens de protection (41).

7. Rabot à main portatif selon la revendication 3, caractérisé par des moyens de garde (60) sur le côté opposé du carter comportant un support (61) avec une partie sensiblement verticale (65) et une partie sensiblement horizontale, la partie horizontale se prolongeant à l'extérieur du côté du carter, un organe allongé (70) en dessous de ladite partie horizontale conçus et formés pour être verrouillés ensemble à une partie prédéterminée, l'extrémité de l'organe allongé (70) proche du carter comportant und paroi (72) perpendiculaire à l'organe allongé (70) et placé pour être mobile sous l'outil de rabotage (14) et le carter (11), pour obtenir une position fixe souhaitable.

**Patentansprüche**

1. Elektrohandhobel zum Hobeln eines Werkstücks, mit

einem Gehäuse (11), das ein im wesentlichen zylindrisches Hobelwerkzeug (14) enthält, welches zur Drehung um eine horizontale Achse drehbar gelagert ist,

einem Motor zum Antreiben des Hobelwerkzeugs, und

einer Kombination aus Schutzvorrichtung und Falztiefenanschlag (30) enthaltend

— eine benachbart zum Hobelwerkzeug (14) befestigte Schutzeinrichtung (40) zum Blockieren des Zugangs zu wenigstens einem Teil des Werkzeugs, wobei die Schutzeinrichtung mit dem Gehäuse (11) quer zu der genannten horizontalen Achse beweglich verbunden ist,

— ein Federelement (52), um die Schutzeinrichtung (40) elastisch nach unten zu drücken, und

— eine Einstelleinrichtung (32, 34) zum Einstellen der Falztiefe, gekennzeichnet durch

einen Anschlag (36) zum Steuern des Masses, bis zu dem die Schutzeinrichtung (40) entgegen der Druckkraft des Federelementes (52) nach oben bewegbar ist, wenn die Tiefe des Falzschnittes eingestellt worden ist, wobei die Höhenposition des Anschlags (36) durch die Einstelleinrichtung (32, 34) und damit die Tiefe des Falzschnittes einstellbar ist.

2. Elektrohandhobel nach Anspruch 1, gekennzeichnet durch einen Seitenanschlag (60) zum Einstellen der Breite des Falzschnittes.

3. Elektrohandhobel nach Anspruch 1 oder 2, dadurch gekennzeichnet, daß die Kombination aus Schutzeinrichtung und einstellbarem Falztiefenanschlag längs eines Endes des Hobelwerkzeugs (14) an einer Seite des Gehäuses befestigt ist und die Schutzeinrichtung durch ein festes, im Hobel (10) montiertes Widerlager (48) in ihrer Abwärtsbewegung begrenzt ist.

4. Elektrohandhobel nach Anspruch 3, dadurch gekennzeichnet, daß der Anschlag (36) ein längliches Element (36) enthält, das um ein vorgegebenes Maß vom Gehäuse herabhängt und ein Ende (59) aufweist, das gegen einen auf der Schutzeinrichtung (41) vorgesehenen Vorsprung stößt.

5. Elektrohandhobel nach Anspruch 4, dadurch gekennzeichnet, daß der Vorsprung auf der Schutzeinrichtung (41) in Form eines horizontalen Plattenelementes so ausgebildet ist, daß es im Betrieb des Hobels (10) im Gleitkontakt mit einem Werkstück steht.

6. Elektrohandhobel nach Anspruch 5, dadurch gekennzeichnet, daß ein Kantenteil der Seite, die die Kombination aus Schutzeinrichtung und Falztiefenanschlag (30) enthält, mit einem Kanal versehen ist, in dem das längliche Teil (36) und ein hochstehender verlängerter Abschnitt (29) der Schutzeinrichtung (41) positioniert sind.

7. Elektrohandhobel nach Anspruch 3, gekennzeichnet durch einen Seitenanschlag (60) an der entgegengesetzten Seite des Gehäuses mit einem Bügel (61), der einen im wesentlichen hochstehenden Abschnitt (65) und einen im wesentlichen horizontalen Abschnitt aufweist, wobei sich der horizontale Abschnitt von der Gehäuseseite nach außen erstreckt, ferner gekennzeichnet durch ein längliches Teil (70) unterhalb dieses horizontalen Abschnittes, das so ausgebildet ist, daß es an einer vorgegebenen Stelle zusammengespannt werden kann, wobei das Ende des länglichen Teils (70) benachbart zum Gehäuse eine senkrecht zum länglichen Teil (70) ausgebildete Wand (72) aufweist und bewegbar unter dem Hobelwerkzeug (14) und dem Gehäuse (11) angeordnet ist, um eine gewünschte feste Position einzunehmen.

FIG. I.

0044354

FIG. 2.

FIG. 3.

0044 354

FIG. 4.

FIG. 5.

FIG. 6.

FIG. 7.

FIG. 8A.

FIG. 8B.

FIG. 8C.

6